# EUROPEAN PATENT APPLICATION

(11) **EP 0 620 975 A2**
(43) Date of publication of application: **26.10.1994**
(21) Application number: 94302663.3
(22) Date of filing: 14.04.1994
(51) Int. Cl.: A21D 8/06, A21D 15/02, A21D 8/00

(54) **Improved microwaveability of baked products**

(30) Priority: 21.04.1993 US 50812
(71) Applicant: KRAFT FOODS, INC., White Plains New York 10625 (US)
(72) Inventor: Mao, Wei-Wen, Deerfield, Illinois 60015 (US); Barber, Deborah Diane, Arlington Heights, Illinois 60005 (US); Hellgeth, Lorraine Clauss, Chicago, Illinois 60646 (US)
(74) Representative: Eyles, Christopher Thomas

(57) **Abstract**

The present invention is directed to a method for providing a low-fat frozen cooked dough product which substantially retains its palatability upon microwave reheating from the frozen state. The method of the invention includes the steps of mixing ingredients comprising flour, water and a leavening agent to form a dough. The dough contains less than 2% fat. After fully proofing the dough, the dough is contacted with steam as the sole source of heat used to cook the dough. Thereafter, the cooked dough is frozen. The frozen cooked dough may then be subjected to microwave heating by the end user to provide a palatable warmed, cooked dough product which has retained its palatability, is not tough, and is substantially similar in taste and appearance to counterpart dough product which has been cooked by conventional convection baking. The cooked dough product is preferably a bagel type dough product, but may be any low-fat dough, such as pizza crust.

## Description

### Field of the Invention

The present invention is directed to a method for providing a frozen, low-fat cooked dough product which substantially retains its palatability upon microwave reheating. More particularly, the present invention is directed to a method for making bagels and other low-fat dough products which can be frozen and which retain their palatability when reheated in a microwave oven. The method utilizes steam as the sole source of cooking heat prior to freezing the cooked dough product.

### Background of the Invention

There is an increasing trend to provide frozen food products which can be reheated in a microwave oven for rapid and easy utilization in the household or for heating machine vendable food products. The modern consumer of processed food seeks to achieve a high quality food product with a minimum of preparation. While microwave energy will rapidly heat many food products, not all food products are adaptable to microwave heating to deliver the same quality as is associated with traditional convection oven heating. This lack of quality is particularly prevalent in the area of microwave reheated baked goods. It is an even more acute problem with the microwave heating of low-fat baked goods, such as bagels.

Traditionally, bagels are prepared by a unique two-stage cooking process wherein a dough is formed into donut shaped rings and proofed. The rings are first cooked for a period of time in heated water followed by baking in a convection oven. The two-stage cooking process results in a baked product with a unique chewy texture that is well associated with bagels.

In the traditional manufacture of bagels, a dough is utilized which has no added fat, i.e., the dough consists essentially of flour, water, yeast, salt and sugar. The problems associated with the use of microwave energy for heating leavened dough products is exacerbated for non-fat and low-fat baked products having less than about 2% fat. Even without freezing of the baked low-fat bagel, microwave heating at the time of utilization results in changing the texture of the bagel or low-fat baked dough product to a chewy, rubbery consistency that may become so tough that it is difficult to tear such products.

The problem of providing microwaveable baked goods has been recognized and various formulation solutions have been proposed. U.S. Patent Nos. 4,560,559 and 4,463,020, both to Ottenburg, discuss the preparation of yeast-raised dough products having improved resistance to deterioration caused by microwave heating. The '020 Ottenburg patent accomplishes the improvement by the incorporation of from about 5% to about 60% by weight of wheat flour of a long-grain rice flour. The '559 Ottenburg patent incorporates a similar amount of a rice starch, corn starch or wheat starch possessing an average crystal size less than 20 microns. Both Ottenburg patents indicate that the dough product containing the starch should not be in a frozen state when reheated by microwave energy and if a frozen product is produced, it should be defrosted or thawed before being heated in a microwave oven.

U.S. Patent No. 4,885,180 to Cochran, et al. describes a refrigerated, frozen or shelf-stable baked good which will substantially retain its palatability upon microwave heating. The improvement is accomplished by the incorporation into the baked good of an effective amount of a chemically-modified starch. The chemically-modified starch is preferably an acetylated starch, hydroxypropylated starch, succinylated starch, propylated starch or combination thereof. The modified starch is incorporated in an amount sufficient to reduce deterioration in the palatability of the baked good upon microwave heating, preferably from 5 to 30 baker's percent. The starches are derived from potato, corn, wheat, rice and combinations thereof.

U.S. Patent No. 4,957,750 to Cochran, et al. is also directed to refrigerated, frozen or shelf-stable, improved baked goods which substantially retain their palatability upon microwave heating. The improvement in this patent is accomplished by the incorporation into the baked dough formulation of an effective amount of a protein modifier which contains free sulfhydryl groups. L-cysteine is a preferred protein-modifier which is incorporated into a dough at a level of 220 ppm baker's percent.

There is, however, a need to find a method using simple ingredients for producing cooked dough products which have a low level of fat and which will substantially retain their palatability upon microwave warming or heating. The frozen dough products which are to be microwave heated should be capable of being taken out of the freezer and immediately heated by microwave energy without the need for defrosting or thawing prior to microwave heating.

U.S. Patent No. 3,821,441 to Tomita, et al. describes a method for making a frozen cake. In the method, a cake dough is prepared by kneading egg, sugar, wheat flour, oil or shortening and other cake-making adjuncts, placing the cake dough in a cake mold and cooking the cake dough by contacting the cake dough with steam. The steamed cake dough is frozen for subsequent use by defrosting at ambient temperature. The Tomita, et al. patent does not recognize or teach the relationship between steam cooking of a low fat dough product and improved palatability when the steam cooked, low fat dough product is subsequently heated from the frozen state by microwave heating.

### Summary of the Invention

The present invention is directed to a method for providing a low-fat frozen cooked dough product which substantially retains its palatability upon microwave reheating from the frozen state. The method of the invention includes the steps of mixing dry ingredients comprising flour and a leavening agent with water to form a dough. The dough contains less than 2% fat. After fully proofing the dough, the dough is contacted with steam as the sole source of heat used to cook the dough. Thereafter, the cooked dough is frozen. The frozen cooked dough may then be subjected to microwave heating by the end user to provide a palatable warmed, cooked dough product which has retained its palatability, is not tough, and is substantially similar in taste and appearance to counterpart dough product which has been cooked by conventional convection baking. The cooked dough product is preferably a bagel type dough product, but may be any low-fat dough, such as a pizza crust.

### Detailed Description of the Invention

In accordance with the present invention, a frozen, low-fat cooked dough product is provided which substantially retains its palatability upon microwave reheating and which has the characteristics associated with a baked good, but which does not undergo conventional cooking by convection baking. The dough product is prepared by conventional means and techniques from a wheat based flour and is generally prepared from the simplest type of dough ingredients, including wheat flour, water, yeast, salt and sugar. In general, the water is present at a level of from about 50 to about 70 baker's percent, the yeast, depending upon the form, is present at a level of from about .5 to 5.0 baker's percent, salt is present at a level of from about 1.5 to about 2.5 baker's percent and sugar is present at a level of from about 2 to about 4 baker's percent. Baker's percent uses flour as the basis, with the other components expressed as a percentage by weight of the flour. The fat present in the dough product of the present invention is less than 1% by weight of the dough product. The ingredients for the dough product are combined by blending the dry ingredients, followed by addition of the water into which the yeast has been added. Mixing is carried out in a suitable mixer, such as a pin mixer or Hobart mixer with a dough hook. The dough is then permitted to rest for about 5 minutes after which the dough temperature should be between about 80°F and about 85°F (about 26.7°C and about 29.4°C).

The dough is divided into pieces which are rounded and allowed to rest for about 10 minutes. The dough pieces are formed into a bagel shape and then proofed for a period of between 20 and 45 minutes in a high humidity proofing chamber at a temperature of between about 90° to about 95°F (about 32.2° to about 35.0°C) and a relative humidity of between about 75 and 95%. The proofed dough pieces may then be subjected to a retardation step, wherein the proofed bagels are placed in a refrigerator for about 12 hours. The retardation step is optimal.

The method of the present invention is particularly suitable for the preparation of a bagel type of baked good. For the preparation of bagels, the dough is preferably formed into the traditional donut shape of a bagel prior to proofing.

After proofing, the shaped dough product is cooked by contacting the dough with steam. Ambient steam or high pressure steam can be used for the steam cooking step. A steam tunnel may also be used. The temperature of the steam should be in the range of from about 212°F to about 275°F (about 100.0°C to about 135.0°C). The shaped dough product is placed on a screen type surface and placed over a water containing boiler wherein the water is maintained at a boiling temperature. The dough products, depending upon the method of steaming, are steam cooked for a period of from about 2 to about 20 minutes to fully cook the dough. The surface may be dried and a coloring/browning agent applied to impart baked product color.

Thereafter, the cooked dough is frozen and placed into suitable packages for distribution. The end user may remove the steam cooked dough product from the container and heat the frozen cooked dough product in a microwave oven to provide a warm/hot finished cooked dough product having a palatable texture, but lacking the toughness of bagel products prepared with a convection baking step. The present invention will also work with retarded bagels.

Of course, the steam cooked dough products of the present invention are not subjected to the natural browning reactions of food which occur during conventional convection cooking. Such natural browning reactions are caused by the well known Maillard reaction which is the reaction between reducing sugars and amino groups of the protein in the food. The Maillard reaction occurs at normal cooking temperatures and is dependent on a number of factors, such as temperature, pH, concentration, water activity, oxygen supply and nature of the raw materials among other factors. The Maillard reaction does not occur to a significant degree when utilizing steam as the cooking medium in accordance with the present invention. Accordingly, it is desirable to utilize a coloring/browning agent for the steam cooked dough products of the present invention. This can be accomplished by brushing the surface of the steam cooked dough product with the coloring/browning agent prior to freezing.

Coloring/Browning agents are well known in the baking industry. Examples of coloring agents include caramel color or annato. Exemplary of a known browning agent is the browning agent described in U.S. Patent No. 5,043,173 to Steinke, et al. The browning agent of the Steinke, et al. patent is a water-in-oil emulsion, a surfactant for stabilization of the emulsion and an edible base in the aqueous phase adapted to induce a browning reaction in a foodstuff having a carbonyl-containing browning reactant upon heating during a microwave cooking step. Other browning agents for foodstuffs having carbonyl-containing components for the browning reaction which are particularly suitable for microwaveable browning coatings include U.S. Patent No. 4,448,791 to Foley, et al. For steam cooked dough products like pizza crusts, the use of a coloring/browning agent is not required since the steam cooked dough crust is covered with pizza toppings prior to freezing the dough product.

The following examples further illustrate various features of the invention, but are intended to in no way limit the scope of the invention which is set forth in the appended claims.

### Example 1

A dough formulation having the following components was prepared.

| Ingredients | Baker's Percent |
|---|---|
| flour (high Gluten) | 100.00 |
| water | 54.00 |
| yeast (instant dry) | 0.75 |
| salt | 2.00 |
| sugar | 3.00 |
| color (added later) | variable |

The flour, salt and sugar were placed in the bowl of a Swanson mixer and blended. The water was heated to 110° F (43.3°C) and yeast was stirred in. The water/yeast slurry was added to the flour blend and mixing at 60 rpms was conducted until optimal dough development, approximately 4-5 minutes in this case.

The mixed dough was removed from the mixer at a temperature of between 80 and 85°F (26.7 and 29.4°C) and permitted to rest covered for 5 minutes. The dough was divided with a cutter into four 70 gram pieces, folded over four times and shaped into balls, then allowed to rest at room temperature for 10 minutes. The dough balls were placed one at a time in a bagel former and formed into a donut bagel shape. The bagel shapes were placed on baking sheets sprinkled with cornmeal and placed into a proofing cabinet at 90°F (32.2°C) and 85% relative humidity for 40 minutes. The proofed bagels were removed from the proofing cabinet, brushed to remove cornmeal particles, and divided into a control batch and an experimental batch.

The controls were boiled for 30 seconds on each side and the bottoms were dried and the bagels were baked at 450°F (232.2°C) for 13 minutes. These conventionally prepared bagels were then frozen in a blast freezer for 30 minutes, packaged and subsequently stored in a freezer at -20°F (-28.9°C).

The experimental samples were placed on top of cheesecloth that had been placed over a wire screen. These bagels were then placed into the top of a boiler containing boiling water. The boiler was covered and the bagels were steamed for 15 minutes, after which the tops were dried and coloring was added to the surface. The bagels were frozen in a blast freezer, packaged and stored in a freezer at -20°F (-28.9°C).

Upon heating the frozen control bagels in a microwave oven at the high setting for 1 minute, a heated bagel was produced having a very tough and chewy texture.

The steam cooked bagels of the present invention, upon being heated in a microwave oven at the high setting for 1.5 minutes, produced a bagel having a palatable texture and did not have the tough chewy texture of the conventionally cooked control bagels.

## Claims

1. A method for providing a frozen, low-fat cooked dough product, which substantially retains its palatability upon microwave reheating comprising the steps of:
(a) mixing dry ingredients comprising flour and a leavening agent with water to form a dough;
(b) proofing said dough;
(c) contacting said dough with steam as the sole source of heat used to cook said dough; and
(d) freezing said cooked dough;
whereby upon subsequent microwave reheating of said frozen steam cooked dough, a dough product is provided having a palatable texture.

2. A method in accordance with claim 1, wherein said steam contacting is for a period of from about 2 to about 20 minutes.

3. A method in accordance with claim 1 or claim 2, wherein said steam contacting is at a temperature of from about 212°F to about 275°F (about 100.0°C to about 135.0°C).

4. A method in accordance with any one of claims 1 to 3, wherein said dough has yeast at a level of from about 0.5 to about 5 baker's percent, salt at a level of from about 1.5 to about 2.5 baker's percent, sugar at a level of from about 2 to about 4 baker's percent and water at a level of from about 50 to about 70 baker's percent.

5. A method in accordance with any one of claims 1 to 4, wherein a coloring or browning agent is applied to the surface of said dough.
